# EUROPEAN PATENT APPLICATION

(11) **EP 4 635 774 A1**
(43) Date of publication of application: **22.10.2025**
(21) Application number: 25170650.3
(22) Date of filing: 15.04.2025
(51) Int. Cl.: B60L 1/02, B60L 53/10, B60L 53/14, B60L 58/12, B60L 58/15, B60L 58/26, B60L 58/27

(54) **TRACKED VEHICLE, PREFERABLY A SNOW GROOMER, ITS CONTROL METHOD AND A CHARGING SYSTEM COMPRISING SAID TRACKED VEHICLE**

(30) Priority: 16.04.2024 IT 202400008644
(71) Applicant: PRINOTH S.p.A., 39049 Vipiteno (BZ) (IT)
(72) Inventor: SALIS, Francesco, 39049 Vipiteno (BZ) (IT); RAUTSCHER, Georg, 39049 Vipiteno (BZ) (IT); PEGORARO, Roberto, 39049 Vipiteno (BZ) (IT); PAOLETTI, Alberto, 39049 Vipiteno (BZ) (IT)
(74) Representative: Studio Torta S.p.A.

(57) **Abstract**

A method for controlling electric or hybrid plug-in electric tracked vehicle, preferably a snow groomer; the method comprises the step of operating in a first operating mode when the rechargeable battery assembly (14) is not fully charged and, in said first operating mode, the tracked vehicle (1) requests and receives current and supplies it to the rechargeable battery assembly (14); the method comprises the step of operating in a second operating mode when the rechargeable battery assembly (14) is fully charged and, in said second operating mode, the tracked vehicle (1) requests and receives current and is controlled so as to consume at least a minimum current value greater than a given current threshold continuously and without interruptions, supplying it to the heater assembly (30) so that it consumes said minimum current value.

## Description

### CROSS-REFERENCE TO RELATED APPLICATIONS

This patent application claims priority from Italian patent application no. 102024000008644 filed on April 16, 2024, the entire disclosure of which is incorporated herein by reference.

### TECHNICAL FIELD

The invention relates to tracked vehicle, preferably a snow groomer, to a method for the control thereof and to a charging system comprising said tracked vehicle. In particular, the invention relates to electric or plug-in hybrid electric tracked vehicles, in particular snow groomers.

### STATE OF THE ART

As it is known, plug-in hybrid electric or electric tracked vehicles comprise a rechargeable battery assembly, preferably a traction battery assembly, which supplies energy to an electric motor assembly, comprising one or more electric motors, which, in turn, supplies kinetic energy to one or more of the operating devices, in particular tracks and/or at least to one of the accessories, for example a tiller and/or a blade and/or a winch. As a consequence, the rechargeable battery assembly needs to be charged at the end of the work cycle, preferably during a stop. The rechargeable battery assembly is usually charged by means of a charging station, in which there are an electrical connector with or without a built-in charging cable and an electronic control unit of the charging station, which controls the current and/or the voltage supplied while charging, preferably in communication with an electronic control unit of the vehicle, which manages the input current. The traction battery assembly has a first allowed operating temperature range and a second optimal operating temperature range, which is comprised within the first temperature range; in other words, the second temperature range is a sub-set of the first temperature range. For instance, below a given temperature (for example -10°C, but depending on the type of battery), the rechargeable battery assembly does not supply current,; consequently, when the tracked vehicle is used in environments with a harsh climate, this can cause problems.

Another drawback of the prior art is that there are different types of charging stations, in which each control unit of the charging station acts differently and unevenly with respect to the others, especially in terms of deactivation of the charge. In particular, once the current supplied by the charging station drops to zero, for example when the rechargeable battery assembly has reached a 100% charge, the electronic control unit of the charging station ends the supply of current and it will no longer be possible to reactivate the supply of current except with a manual procedure and/or with the intervention of an operator.

This entails, as a drawback, that any utilities of the electric or plug-in hybrid electric tracked vehicle, other than the charging of the battery assembly, which required current, for example according to a cyclic activation and deactivation interval (for example, with a cyclic duty-cycle ON-OFF), are definitively prevented from being powered or must get energy from the rechargeable battery assembly, thus at least partially discharging it.

### SUMMARY OF THE INVENTION

An object of the invention is to provide a method for controlling an electric or plug-in hybrid electric tracked vehicle, which reduces or overcomes at least one of the drawbacks discussed above.

According to the invention, there is provided a control method according to one of the claims from 1 to 5.

Thanks to this invention, the electric or plug-in hybrid electric tracked vehicle remains electrically connected for the entire stop at the charging station regardless of the type of charging station, of the charging standard and of the type of charging (direct current or alternating current) and also when the charging station operates as a master and the vehicle operates as a slave or vice versa. This makes it possible to power the utilities, preferably to heat or cool the battery and/or the cabin and/or an oil of at least one of the hydraulic circuits and/or a portion of the tracked vehicle, for the entire duration of the stop. As a consequence, the tracked vehicle, in particular a snow groomer, will always be ready to start again after the stop, even if the latter was prolonged and/or at very low temperatures, for example below zero degrees Celsius, and, in particular, the battery and/or the cabin and/or the oil will always be in the optimal condition of use and ready to start.

In particular, thanks to the invention, the rechargeable battery assembly can constantly be heated (and, if necessary, cooled) so as to maintain it in the second optimal operating temperature range or at least in the first allowed operating temperature range.

In this way, thanks to the invention, the vehicle can also be parked outside and/or at a temperature well below zero, while ensuring its availability and readiness for use.

A further object of the invention is to provide an electric or plug-in hybrid electric tracked vehicle, preferably a snow groomer, which reduces or overcomes at least one of the drawbacks discussed above.

According to the invention, there is provided an electric or plug-in hybrid electric tracked vehicle, preferably a snow groomer, according to one of the claims from 6 to 13.

A further object of the invention is to provide a charging system, which mitigates at least one of the drawbacks of the prior art discussed above.

According to the invention, there is provided a charging system according to claim 14.

### BRIEF DESCRIPTION OF THE DRAWINGS

Further features and advantages of the invention are defined in the appended dependent claims and will be best understood upon perusal of the following description of a non-limiting embodiment, with reference to the accompanying figures, wherein:
- figure 1 is a schematic side view, with parts removed for greater clarity, of a tracked vehicle, in particular a snow groomer, according to the invention;
- figure 2 is a top view, with parts removed for greater clarity and parts shown in a block diagram, of a charging system comprising the tracked vehicle of figure 1 and a charging station.

### DETAILED DESCRIPTION OF THE INVENTION

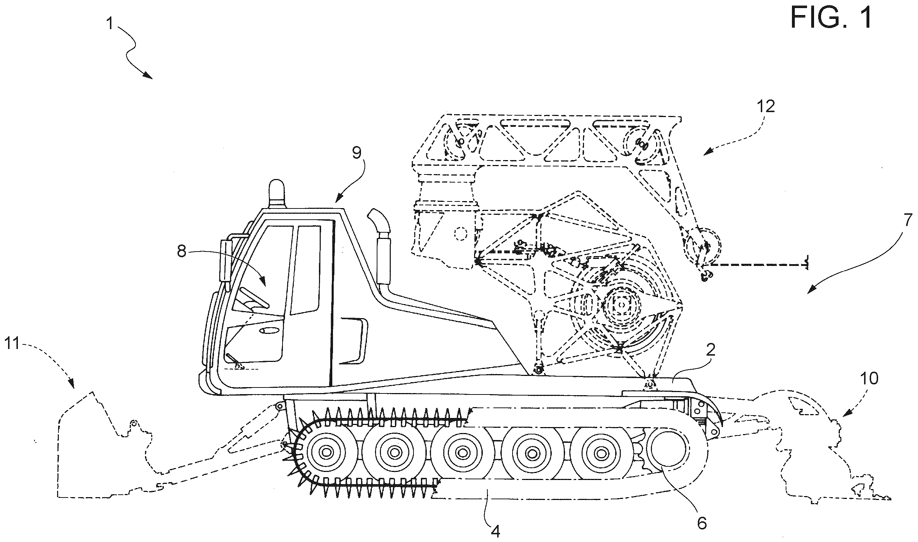

With reference to figure 1, reference number 1 shows a tracked vehicle, in particular a snow groomer.

In particular, the invention relates to an electric tracked vehicle (also called BEV) or a plug-in hybrid electric tracked vehicle (also called PHEV), which preferably comprises a rechargeable traction battery assembly.

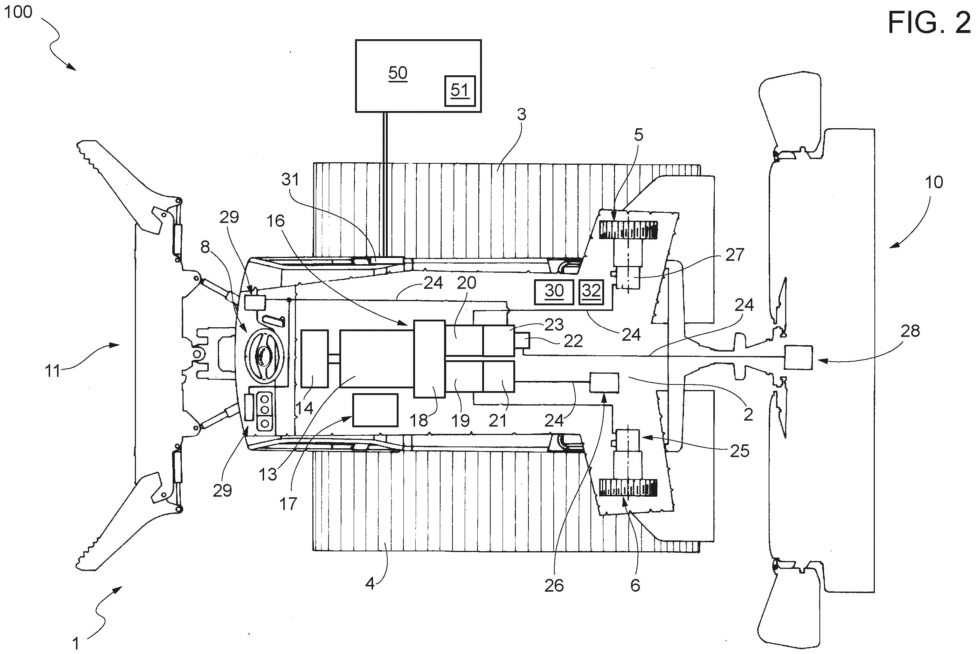

The snow groomer vehicle 1 comprises a frame 2; a first track 3 (figure 2); a second track 4; a first drive wheel 5 (figure 2) and a second drive wheel 6, which are independent of one another and are coupled to the first track 3 (figure 2) and to the second track 4, respectively; a group of operating devices 7; a user interface 8; and a cabin 9.

In this specific case and with reference to figure 2, the group of operating devices 7 (figure 1) comprises the first drive wheel 5; the second drive wheel 6; and, preferably, one or more of the following accessories: a tiller 10; a blade 11; and a winch 12 (figure 1).

In an embodiment, one or more or all of the accessories, namely the tiller 10, the blade 11, and the winch 12, is/are omitted.

With reference to figure 2, the tracked vehicle 1 comprises a rechargeable battery assembly 14; an electric motor assembly 13 electrically powered by the rechargeable battery assembly 14; preferably, a power transmission 16 operatively designed to connect the electric motor assembly 13 to the group of operating devices 7 (figure 1); a heater assembly 30; an electrical connector 31 for receiving input power; an electric control unit 17 for managing the received input power and, preferably, the heater assembly 30.

The electric motor assembly 13 comprises one or more electric motors.

In particular, the electric motor assembly 13 is connected to the rechargeable battery assembly 14 through an inverter or without the use thereof.

In an optional, non-limiting embodiment of the invention, the electric motor assembly 13 comprises one or more inverters.

By way of optional and non-limiting example, the rechargeable battery assembly 14 comprises lithium or lithium ions.

In a preferred, though non-limiting embodiment of the invention, the electric motor assembly 13 is operatively connected to the group of operating devices 7 in a direct manner and/or through one or more transmission shafts of the electric motor assembly 13; consequently, the power transmission 16 can preferably be omitted at least in part or entirely. In this embodiment, the electric motor assembly 13 can comprise one single electric motor or several electric motors, which power more than one working device 7, or one electric motor for each respective operating device 7.

By way of non-limiting example, the rechargeable battery assembly 14 can comprise one or more rechargeable batteries, each comprising a number of cells in series and/or in parallel.

By way of non-limiting example, the heater assembly 30 can comprise one single heater with one or more heating circuits; or several heaters, which are independent of one another, preferably each with its own heating circuit; or one or more heaters, wherein one or more or all work together in one or more groups of heaters and wherein the heaters of a same group of heaters share a same heating circuit.

In a preferred, though non-limiting embodiment of the invention, the rechargeable battery assembly 14 is a traction battery and is preferably configured to power the propulsion of the tracked vehicle 1 and/or the movement of at least one of the accessories selected from the following group: blade 11, winch 12, tiller 10.

The electric motor assembly 13 can comprise one or more electric motors in series and/or in parallel, which directly or indirectly operate, preferably through the power transmission 16 or another power transmission, at least one of: first drive wheel 5, second drive wheel 6, tiller 10, blade 11, winch 12.

In an optional, but non-limiting, preferred embodiment of the invention, the tracked vehicle 1 comprises a cooler assembly 32, which can be integrated in whole or in part into the heater assembly 31 or work together with all or part of the heater assembly, by way of non-limiting example, sharing one or more heating and cooling circuits, or be separate therefrom in whole or in part, by way of non-limiting example, having separate heating and cooling circuits.

By way of non-limiting example, the cooler assembly 32 can comprise one single cooler with one or more cooling circuits; or several coolers, which are independent of one another, preferably each with its own cooling circuit; or one or more coolers, wherein one or more or all work together in one or more groups of coolers, wherein the coolers of a same group of coolers share a same cooling circuit.

In a preferred, though non-limiting embodiment of the invention, the power transmission 16 is a predominantly hydraulic power transmission and comprises a mechanical transmission 18, five pumps 19, 20, 21, 22 and 23, hydraulic ducts 24, preferably of the flexible type, and five hydraulic actuators 25, 26, 27, 28 and 29.

The mechanical transmission 18 is coupled, on one side, to the electric motor assembly 13 and, on the other side, to a first group of pumps comprising the pumps 19 and 21 and to a second group of pumps comprising the pumps 20, 22, 23, so as to transmit the motion received from the electric motor assembly 13.

Each pump 19, 20, 21, 22 and 23, through hydraulic ducts 24, is coupled to one of the hydraulic actuators 25, 27, 26, 28 and 29, respectively.

Preferably, the hydraulic actuator 25 is mechanically coupled to the second drive wheel 6 to provide it with mechanical and/or kinetic energy.

Preferably, the hydraulic actuator 27 is mechanically coupled to the first drive wheel 5 to provide it with mechanical and/or kinetic energy.

Preferably, the hydraulic actuator 28 is mechanically coupled to the tiller 28 to provide it with mechanical and/or kinetic energy.

Preferably, the hydraulic actuator 27 is mechanically coupled to the winch 12 to provide it with mechanical and/or kinetic energy.

Preferably, the hydraulic actuator 29 is mechanically coupled to the blade 11 to provide it with mechanical and/or kinetic energy.

As mentioned above, in one or more embodiments, one or more of the tiller 10, the blade 11 and the winch 12 may be omitted and, in this case, the relative actuator and the relative pump coupled to the omitted accessory are omitted.

In a preferred embodiment, which is not shown in the accompanying figures, the electric motor assembly 13 comprises a further electric motor coupled, preferably directly, to the first drive wheel 5 and a further electric motor coupled, preferably directly, to the second drive wheel 6; therefore, in this embodiment, the pumps 19 and 20 of the power transmission 16 are omitted and the actuators 25 and 27 of the power transmission 16 are omitted and replaced by said respective further electric motors electrically connected to the rechargeable battery assembly 14 and powered by it with or without the use of respective inverters. In this embodiment, the power transmission 16 preferably powers at least one of the accessory devices in a hydraulic manner as discussed above, in particular at least one of the devices chosen from the group of devices comprising: blade 11, tiller 10, winch 12.

According to an alternative embodiment, which is not shown in the figures, the power transmission 16 is a predominantly electric or mixed electric and hydraulic power transmission, wherein, preferably, one or more of the pumps 19, 20, 21, 22 and 23 are replaced by one or more electric generators or omitted, and wherein, preferably, one or more of the respective hydraulic actuators 25, 26, 27, 28 and 29 are replaced by respective electric actuators, which are powered by possible electric generators and/or inverters or directly by the rechargeable battery assembly 14, and wherein the respective hydraulic ducts 24 are replaced by electrical cables. In the embodiment in which the tracked vehicle 1 is a plug-in hybrid electric vehicle (also called PHEV), it also comprises, in addition to the above-mentioned elements, an internal combustion engine coupled to the power transmission 16 to provide mechanical energy, preferably kinetic energy, to the operating devices 9.

In particular, the rechargeable battery assembly 14 is configured to power the movement of at least one of the accessories selected from: winch 12, tiller 10, blade 11; and/or to power a propulsion of the tracked vehicle, in particular by moving the first and/or the second drive wheel 4,5 and consequently the tracks 3, 4 of the tracked vehicle 1. Preferably, the rechargeable battery assembly 14 is a traction battery.

The electronic control unit 17 is configured to operate in a first operating mode when the rechargeable battery assembly 14 is not fully charged or when the charge is below a given charge threshold, for example 90% or 95% or 99%; in said first operating mode, the electronic control unit 17 requests and receives current from the electrical connector 31 and supplies it to the rechargeable battery assembly 14 and, preferably, to the heater assembly 30 and/or to the cooler assembly 32 and/or to other utilities of the tracked vehicle 1 until the rechargeable battery assembly 14 is fully charged.

The electronic control unit 17 is configured to operate in a second operating mode when the rechargeable battery assembly 14 is fully charged or when the charge exceeds a given charge threshold, for example 90% or 95% or 99%; in said second operating mode, the electronic control unit 17 is configured to continue to request and receive at least a minimum value of current through the electrical connector 31 continuously and without interruptions and to supply with said current at least one of the heater assembly 30 and/or the cooler assembly 32 and/or another utility of the tracked vehicle 1 and, preferably, to control them, so that at least one of the three, even alternatively, consumes at least a predetermined minimum value of current. Said predetermined minimum value is greater than or equal to a given minimum current threshold, preferably equal to 0.5 Ampere or 1 Ampere.

In a preferred embodiment, the heater assembly 30 is configured to heat at least one element selected from the group comprising: cabin 9; rechargeable battery assembly 14; oil of the hydraulic circuit 24 and/or of another hydraulic circuit of the tracked vehicle 1; another portion of the tracked vehicle 1. The heater assembly 30 is preferably controlled by the electronic control unit 17 so that the electronic control unit 17 indicates when it is to be operated, in particular in the second operating mode.

In an embodiment, the electronic control unit is configured to control the heater assembly 30 so that the temperature of the rechargeable battery assembly 14 is always maintained within a first allowed operating temperature range, in which the rechargeable battery assembly 14 is able to supply current when required.

In another preferred embodiment, the electronic control unit is configured to control the heater assembly 30 so that the temperature of the rechargeable battery assembly 14 is always maintained within a second optimal operating range, in which the rechargeable battery assembly 14 can supply, when required, the maximum nominal current. Preferably, the second optimal operating range is a sub-set of the first operating temperature range.

In a preferred embodiment, the heater assembly 30 is configured to heat at least one liquid flowing, in a direct manner and/or through a heat exchanger, in at least one element selected from the group comprising: cabin 9; rechargeable battery assembly 14; oil of the hydraulic circuit 24 and/or of another hydraulic circuit of the tracked vehicle 1; another portion of the tracked vehicle 1.

In a preferred embodiment, the cooler assembly 32 is configured to cool at least one element selected from the group comprising: cabin 9; rechargeable battery assembly 14; oil of the hydraulic circuit 24 and/or of another hydraulic circuit of the tracked vehicle 1; a portion of the tracked vehicle 1; and is preferably controlled by the electronic control unit so that the electronic control unit indicates when it is to be operated, in particular in the second operating mode. In a preferred embodiment, the cooler assembly 32 is configured to cool at least one liquid flowing, in a direct manner and/or through a heat exchanger, in at least one element selected from the group comprising: cabin 9; rechargeable battery assembly 14; oil of the hydraulic circuit 24 and/or of another hydraulic circuit of the tracked vehicle 1; another portion of the tracked vehicle 1.

As mentioned above, the heater assembly 31 and the cooler assembly 32 can or cannot share the same heating and cooling circuits, which will be heating and cooling circuits.

In a preferred non-limiting embodiment of the invention, the electronic control unit 27, preferably in the second operating mode, is configured to operate in a given operating sub-mode, in which it alternately, and preferably cyclically, powers the cooler assembly 32 and the heater assembly 30 so that at least one of the two always consumes the minimum value of said minimum current and the temperature of at least one element selected from the group comprising: cabin 9; rechargeable battery assembly 14; oil of the hydraulic circuit 24 and/or of another hydraulic circuit of the tracked vehicle 1; another portion of the tracked vehicle 1; is maintained within a respective temperature range.

The respective temperature ranges of at least one element selected from the group comprising: cabin 9; rechargeable battery assembly 14; oil of the hydraulic circuit 24 and/or of another hydraulic circuit of the tracked vehicle 1; another portion of the tracked vehicle 1; can be different from one another

In an embodiment, the electronic control unit 17 is configured to control the cooler assembly 32 so that the temperature of the rechargeable battery assembly 14 is always maintained within a first allowed operating temperature range, in which the rechargeable battery assembly 14 is able to supply current when required.

In a preferred embodiment, the electronic control unit 17 is configured to control the cooler assembly 32 so that the temperature of the rechargeable battery assembly 14 is always maintained within a second optimal operating range, in which the rechargeable battery assembly 14 can supply, when required, the maximum nominal current.

In other words, thanks to the invention, in the second operating mode, the electronic control unit 17 controls the heater assembly 30 and preferably the cooler assembly 32 and/or another electric utility of the tracked vehicle 1 so that one of them always operates so as to consume at least the minimum current value and ensure that the charging station 50 does not end the charge and disconnects from the tracked vehicle 1.

The electronic control unit 17 comprises a timer for deciding when to activate a heating and/or cooling priority of at least one element selected from the group comprising: cabin 9; rechargeable battery assembly 14; oil of the hydraulic circuit 24 and/or of another hydraulic circuit of the tracked vehicle 1; another portion of the tracked vehicle 1; so that the temperature of said element is within a respective temperature range at a given instant of time.

For example, at a given instant of time prior to the work start time, the electronic control unit 17 activates with priority the heating and/or cooling of the cabin 9 and/or of the battery assembly and/or of the oil of the hydraulic circuit 24 and/or of another hydraulic circuit of the tracked vehicle 1; and/or of another portion of the tracked vehicle 1. As a consequence, the electronic control unit 17 comprises a memory in which the work start time is stored.

As mentioned above, in an embodiment, the cooler assembly 32 is omitted and, consequently, the parts relating to it must be considered as optional but non-limiting parts of the invention, which can be removed.

The invention also relates to a charging system 100 comprising the tracked vehicle 1 as described above and a charging station 50 configured to supply alternating current or direct current and preferably comprising an electronic control unit 51 of the charging station 50 configured to operate as master or as slave with respect to the electronic control unit 17 of the tracked vehicle 1.

In particular, this invention advantageously applies when the charging station 50, and in particular the electronic control unit 51, operates as a master and the tracked vehicle 1, in particular the electronic control unit 17, operates as a slave, but also vice versa, since the invention manages to ensure that the tracked vehicle 1 always remains connected to the charging station 50 and has the possibility of powering, in any case and at any time, in particular for the entire duration of the stop, even up to the beginning of the work time, a device of the tracked vehicle 1 selected from the group of devices comprising: the heater assembly 30, preferably the cooler assembly 32, another utility of the tracked vehicle 1, so that the rechargeable battery assembly 14 and/or the cabin 9 and/or the oil of one of the hydraulic circuits of the snow groomer vehicle 1 and/or other parts of the tracked vehicle 1 are within a respective desired temperature range throughout the stop and/or at the beginning of the work time and, consequently, the tracked vehicle 1 is ready for use.

Finally, the invention can evidently be subjected to variants, though without going beyond the scope of protection defined by the appended claims.

## Claims

1. A method for controlling a tracked vehicle, in particular an electric or plug-in hybrid electric vehicle, preferably a snow groomer; wherein the tracked vehicle (1) comprises: a rechargeable battery assembly (14); a heater assembly (30); preferably a cooler assembly (32); an electrical connector (31) for receiving input current; preferably an electronic control unit (17) for managing the received input current; wherein preferably the rechargeable battery assembly (14) is a traction battery; preferably the rechargeable battery assembly (14) is configured to power the propulsion of the tracked vehicle and/or the movement of at least one of the accessories of the tracked vehicle (1) selected from the following group: blade (11), winch (12), tiller (10); the method comprising the step of operating in a first operating mode when the rechargeable battery assembly (14) is not fully charged or when its charge is less than a certain percentage of charge, preferably less than 90% or 95% or 99%, and in said first operating mode the tracked vehicle (1) requests and receives current, preferably from a charging station (50), and supplies it to the rechargeable battery assembly (14) and preferably to at least one selected from the group comprising: the heater assembly (30), preferably the cooler assembly (32), another user of the tracked vehicle (1); the method comprises the step of operating in a second operating mode when the rechargeable battery assembly (14) is fully charged or its charge is greater than a certain percentage of charge, preferably greater than 90% or 95% or 99%, and in said second operating mode the tracked vehicle (1) requests and receives current, preferably from a charging station (50), and is controlled to consume at least a minimum value of current greater than a determined current threshold continuously and without interruption, supplying it to at least one selected from the group comprising: the heater assembly (30), preferably the cooler assembly (32), another user of the tracked vehicle (1), which preferably in turn is controlled/are controlled to consume at least said minimum value of current alone or in combination of two or three or alternately between them.

2. Control method of claim 1, comprising the step of heating through the heater assembly (30) at least one selected from the group comprising: a cabin (9) of the tracked vehicle (1), the rechargeable battery assembly (14), oil of a hydraulic circuit of the tracked vehicle (1), another portion of the tracked vehicle (1), so as to maintain the temperature within a respective temperature range.

3. Control method of any one of the preceding claims, comprising the step of cooling through the cooler assembly (32) at least one selected from the group comprising: a cabin (9) of the tracked vehicle (1), rechargeable battery assembly (14), oil of a circuit of the tracked vehicle (1), another portion of the tracked vehicle (1), so as to maintain the temperature within a respective temperature range.

4. Control method of any one of the preceding claims, wherein in the second operating mode in at least one time period the cooler assembly (30) and/or the heater assembly (32) and/or another user of the tracked vehicle are alternately cycled in operation so that at least one of these consumes at least the minimum value of current.

5. Control method of any one of the preceding claims, wherein during the second operating mode the temperature of the rechargeable battery assembly (14) is constantly maintained within a first allowed operating temperature range or within a second optimal operating range, through the heater assembly (30) and/or preferably the cooler assembly (32).

6. A tracked vehicle in particular electric or plug-in hybrid electric, preferably a snow groomer, wherein the tracked vehicle (1) comprises: a rechargeable battery assembly (14), a heater assembly (30), preferably a cooler assembly (32), an electrical connector (31) for receiving input current, and an electronic control unit (17) for managing the received input current; wherein preferably the rechargeable battery assembly (14) is a traction battery; preferably the rechargeable battery assembly (14) is configured to power the propulsion of the tracked vehicle (1) and/or the movement of at least one of the accessories of the tracked vehicle (1) selected from the following group: blade (11), winch (12), tiller (13); wherein the electronic control unit (17) is configured to operate according to a first operating mode when the rechargeable battery assembly (14) is not fully charged or when its charge is less than a certain percentage of charge, preferably less than 90% or 95% or 99%, and wherein in said first operating mode the electronic control unit (17) is configured to request and receive current from the electrical connector (31) and supply it to the rechargeable battery assembly (14) and preferably to at least one selected from the group comprising: the heater assembly (30), preferably the cooler assembly (32), to another user of the tracked vehicle (1); wherein the electronic control unit (17) is configured to operate in a second operating mode when the rechargeable battery assembly (14) is fully charged or its charge is greater than a certain percentage of charge, preferably greater than 90% or 95% or 99%, and in said second operating mode the electronic control unit (17) is configured to request and receive current and control at least one selected from the group comprising: the heater assembly (30), preferably the cooler assembly (32), another user of the tracked vehicle (1) so that together or individually or alternately they always consume at least a minimum value of current greater than a determined current threshold, preferably said threshold being equal to 0.5 Ampere or 1 Ampere.

7. Vehicle of claim 6, wherein the electronic control unit (17) is configured to control the heater assembly (30) so as to heat at least one selected from the group comprising: a cabin (9) of the tracked vehicle (1), rechargeable battery assembly (14), oil of a hydraulic circuit of the tracked vehicle (1), another portion of the tracked vehicle (1) so as to maintain the temperature within a respective temperature range.

8. Vehicle of claim 6 or 7, wherein the tracked vehicle (1) comprises the cooler assembly (32); wherein the electronic control unit (17) is configured to control the cooler assembly (32) so as to cool at least one selected from the group comprising: a cabin (9) of the tracked vehicle (1), rechargeable battery assembly (14), oil of a hydraulic circuit of the tracked vehicle (1), another portion of the tracked vehicle (1) so as to maintain the temperature within a respective temperature range.

9. Vehicle according to one of claims 6 to 8, wherein in the second operating mode the electronic control unit (17) is configured to control the cooler assembly (32) and/or the heater assembly (30) and/or another user of the tracked vehicle so that in at least one period of time in operation they alternate cyclically and at least one of them consumes at least the minimum value of current.

10. Vehicle according to one of claims 6 to 9, wherein in the second operating mode the electronic control unit (17) is configured to control the cooler assembly and/or the heater assembly so that the temperature of the rechargeable battery assembly (14) is constantly maintained within a first allowed operating temperature range or within a second optimal operating temperature range through the heater assembly (30) and preferably the cooler assembly (32) .

11. Vehicle of any one of claims 6 to 10, wherein the heater assembly (30) is configured to heat at least one selected from the group comprising: cabin (9), the rechargeable battery assembly (14), oil of a hydraulic circuit of the tracked vehicle (1), another portion of the tracked vehicle (1); preferably the heater assembly (30) is configured to heat at least one liquid circulating directly and/or through a heat exchanger in at least one selected from the group comprising: cabin (9), the rechargeable battery assembly (14), oil of a hydraulic circuit of the tracked vehicle (1), another portion of the tracked vehicle (1).

12. Vehicle of any one of claims 6 to 11, wherein the tracked vehicle (1) comprises the cooler assembly (32); wherein the cooler assembly (32) is configured to cool at least one selected from the group comprising: cabin (9), the rechargeable battery assembly (14), oil of a hydraulic circuit of the tracked vehicle (1), another portion of the tracked vehicle (1); preferably the cooler assembly (32) is configured to cool at least one coolant circulating directly and/or through a heat exchanger in at least one selected from the group comprising: cabin (9); rechargeable battery assembly (14); oil of a hydraulic circuit of the tracked vehicle (1); another portion of the tracked vehicle (1) .

13. Tracked vehicle of any one of claims 6 to 12, wherein the electronic control unit (17) comprises a timer for deciding when to activate a heating and/or cooling priority of one selected from the group comprising: cabin (9), rechargeable battery assembly (14), oil of a hydraulic circuit of the tracked vehicle (1), and another portion of the tracked vehicle (1); so that its temperature is within a respective temperature range at a given instant of time.

14. Charging system comprising a tracked vehicle according to any one of claims 6 to 13; and a charging station (50) configured to deliver alternating current or direct current and preferably comprising an electronic control unit (51) of the charging station (50) configured to operate as master or as slave with respect to the electronic control unit (17) of the tracked vehicle (1).
